# EUROPEAN PATENT APPLICATION

(11) **EP 0 550 199 A1**
(43) Date of publication of application: **07.07.1993**
(21) Application number: 92311413.6
(22) Date of filing: 14.12.1992
(51) Int. Cl.: B65G 69/18

(54) **Apparatus for filling a container, and a system including such apparatus**

(30) Priority: 16.12.1991 GB 9126674
(71) Applicant: MATCON LIMITED, Moreton-in-Marsh, Gloucestershire GL56 0HJ (GB)
(72) Inventor: Semenenko, Ivan, Moreton-in-Marsh, Glos. GL56 OHJ (GB)
(74) Representative: Johnson, Terence Leslie

(57) **Abstract**

The invention relates to apparatus 1 for filling a first container such as an intermediate bulk container (I.B.C.) 2, with flowable material such as a powder from a second container or store, such as a silo or hopper 3, containing the powder 4, the apparatus 1 comprising a chute 5 having a device 6 operable to open and close both the container 2 and store 3 whereby to allow flow of material 4 from the store 3 to the container 2 through the chute 5, and seal means 7 adapted to operate so that contamination of exterior surfaces of the apparatus 1 is substantially obviated during and after flow of material. In the embodiment the seal means 7 is cooperable with the device 6 and the container 2 and store 3 so that said contamination is substantially obviated.

## Description

The invention relates to apparatus for filling a container with flowable material such as particulate material, and a system including such apparatus.

Thus the apparatus may be used for filling a container such as an intermediate bulk container (I.B.C.) from a store of flowable material, which flowable material may comprise a powder, pellets, slurries and the like and combinations thereof.

The I.B.C. is usually mobile in that it can be moved to a desired station in store for filling, and can subsequently be moved to a further station for distribution of the contents. It is however usually the case that during filling, the exterior surfaces of the I.B.C. and store can become contaminated with the material being transferred. This may not normally give concern, but particularly when "sensitive" materials such as pharmaceutic powders are being transferred health and environmental considerations require that the exterior surfaces of the store and I.B.C. remain uncontaminated with the pharmaceutical powder. Such a powder can be so sensitive environmentally and health wise that 2 parts per million are considered excessive in the environment. Existing systems cannot prevent such contamination or pollution.

It is accordingly an object of the invention to seek to mitigate this disadvantage.

According to one aspect of the invention there is provided apparatus for filling a first container with flowable material from a second container of that material comprising a chute having a device operable to open and close both containers, whereby to allow low of material from the second to the first container through the chute and seal means adapted to operate so that contamination of exterior surfaces of the apparatus is substantially obviated during low of material.

Using the invention it is possible to provide a contamination free environment and filling of a container without a lid or specific charging orifice.

The device may comprise two reciprocable probe devices. This provides for a positive action at the store and container.

The two probe devices may be reciprocable along a common axis. This provides for an efficient use of energy in lifting (and lowering).

The chute may comprise a tube having one probe device adjacent one end and the other probe device adjacent the other end, and the seal means may comprise a seal device at the one end and a seal device at the other end, each seal device being adapted to seal with a respective adjacent probe device. This construction provides for effective sealing over the whole apparatus.

The respective seal devices may each comprise resilient lip seals. These seals provide a positive sealing arrangement,

Alternatively, the chute may comprise two relatively rotatable chute parts, which is particularly applicable where the seal devices may comprise rotational seal devices. The rotation may be about a substantially vertical axis to provide for vertical through flow of material under gravity.

The chute may be a separate body interposable between the containers. This provides for flexibility of construction and use. Alternatively, the chute may be integral with or part of one of the containers.

The apparatus may comprise a frame means mounting the chute for rotation through substantially 180°. This construction provides a way of turning a discharge aperture into a charging aperture.

The frame means may include a main frame and a subframe which may be rotatable with respect to the main frame. This provides a relatively simple yet efficient construction.

The frame means may comprise means to support the second container store This arrangement provides an integral unit.

The frame means may comprise a clamp means to clamp a container in the frame means. This construction helps to provide a positive seal.

The clamp means may comprise a bellows means. This is a simple yet efficient way of effecting lift.

According to a second aspect of the invention there is provided a system for transferring flowable material, comprising a store of that material, a container for receiving that material from the store, and apparatus as hereinbefore defined interposed therebetween.

Apparatus and a system embodying the invention are hereinafter described, by way of example, with reference to the accompanying drawings.
Fig. 1 shows a container, such as an I.B.C., with or for flowable material such as a powder, mounted on transport means such as a fork-lift truck;
Fig.2 shows the I.B.C. still on the fork-lift truck, being loaded and lowered onto apparatus according to the invention, in one stage of filling of the I.B.C. where the I.B.C. is below a store of powder such as a bin or silo;
Fig.3 shows the I.B.C. being rotated through 180° about a horizontal axis so an outlet aperture thereof is uppermost, as viewed on arrow 'A', Fig.2;
Fig. 4 shows the I.B.C. raised to engage an outlet or discharge aperture of the bin for filling with the powder, and viewed on arrow 'A', Fig.2.
Figs. 5 to 12 show to an enlarged scale, and with parts omitted for clarity, stages during the filling operation;
Figs. 13 and 14 show to an enlarged scale details of seal mans of the apparatus.

Referring to the drawings, there is shown apparatus 1 for filling a first container such as an intermediate bulk container (I.B.C.) 2, with flowable material such as a powder from a second container or store, such as a silo or hopper 3, containing the powder 4, the apparatus 1 comprising a chute 5 having a device 6 operable to open and close both the container 2 and store 3 whereby to allow flow of material 4 from the store 3 to the container 2 through the chute 5, and seal means 7 adapted to operate so that contamination of exterior surfaces of the apparatus 1 is substantially obviated during and after flow of material. In the embodiment the seal means 7 is cooperable with the device 6 and the container 2 and store 3 so that said contamination is substantially obviated.

The chute 5 is essentially a tube with a waist. The device 6 comprises two reciprocable probe devices 6' and 6'' which are reciprocable along a common axis, which in use in the embodiment illustrated is substantially vertical.

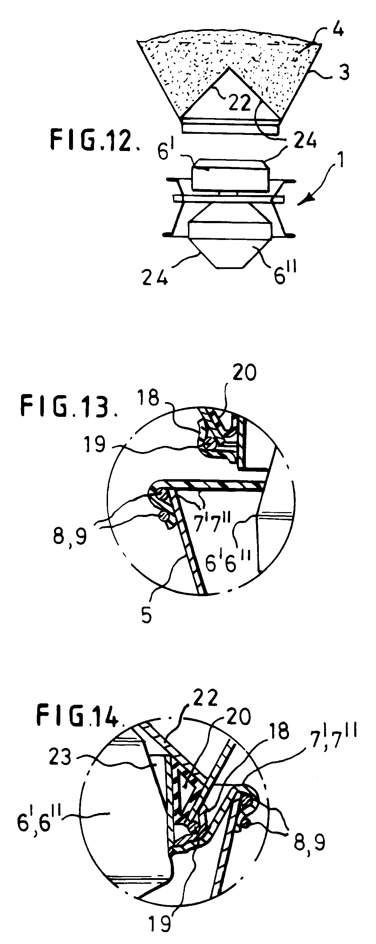

There is one probe device 6' adjacent one end of the chute or tube 5 and the other probe device 6'' adjacent the other end of the tube 5, the seal means 7 comprising a seal device 7', 7'' at each end of the tube, each seal device 7', 7'' comprising a resilient, such as neoprene, lip seal adapted to seal against a respective adjacent probe 6' and 6''. Each lip seal 7', 7'' is secured to the periphery of the chute 5 defining the respective mouth by clip means such as metal clips 8, 9, as shown in Figs. 13 and 14, from which it can be seen that usually the lip seals 7', 7'' extend substantially horizontally as viewed and butt up against the exterior surface of the respective probe device 62, 6''.

The apparatus 1 is mounted on frame means 10 which has a fixed or main frame 11 and a sub-frame 12 which actually supports the chute 5 and is mounted in the main frame 11 on a spindle 13 so that the whole sub-frame 12 can be rotated by suitable motor means (not shown) through 180° about a substantially horizontal axis with respect to the main frame 11, as shown by arrow 'X', Figs, 3, 7.

The main frame 11 also has an arm or projection 14 comprising means to support the silo or hopper 3 at an outlet end 15 thereof. The frame means 10 comprises within the sub-frame a clamp means in the form of an arm 16 which is reciprocable by means such as a bellows 17 to clamp an I.B.C. within the sub-frame 12.

The apparatus 1, I.B.C. 2 and silo or hopper 3 comprise a system for filling the I.B.C. with powder 4 or the like from the silo - though it will be understood that the store could itself comprise an I.B.C. or the like, and that the system can comprise a plurality of I.B.C.'s to be filled. Also, each of the I.B.C. and hopper has an outlet or aperture which, in the case of the I.B.C. is a filling aperture too, as will be described. Each of these apertures has a flexible and resilient annular seal means or member 18 secured to the free edge of the outlet being formed into a 'V' shape by a ring 19. There is also a toroidal or annular soft sponge, say rubber, seal 20 mounted at the under surface (as viewed) of a conical or frusto-conical obturator or valve 21, 22 of the I.B.C. and silo. There is an inflatable suitably pneumatic, toroidal seal 23 at the outlet which is connectible with a source of air under pressure.

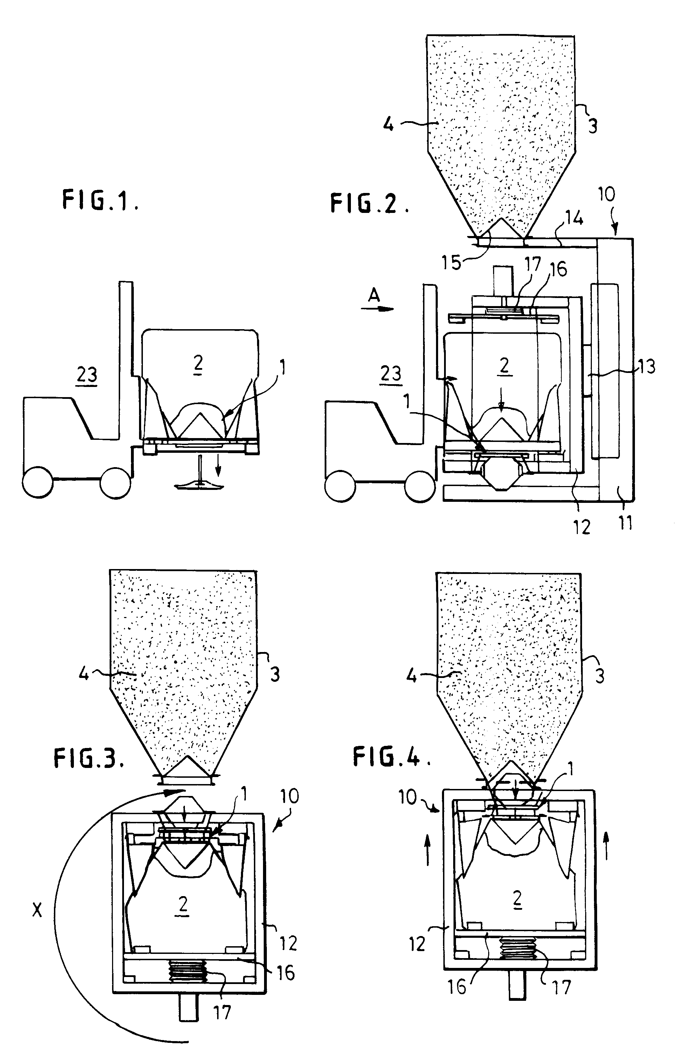

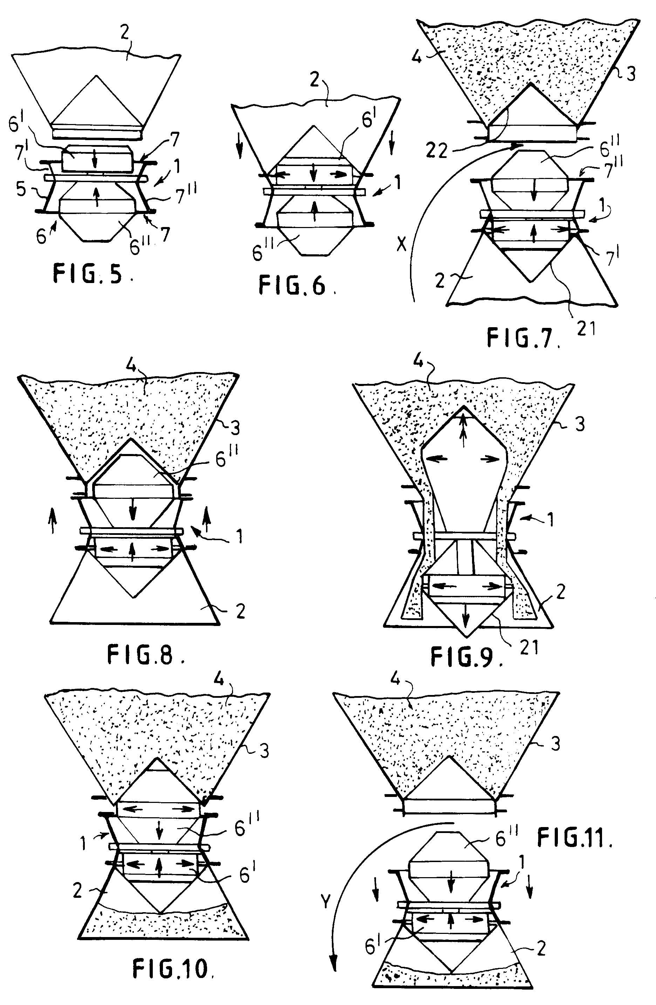

In use to add particulate material 4 to the I.B.C. 2, the I.B.C. 2 is transported by say a fork-lift truck 23, a transport cap for the cone having been removed (Fig. 1), to the apparatus 1, where it is offered up to (Fig. 2) and then set down onto the probe device 6'. This action engages the lip seal 7' at the mouth of the chute 5, and the toroidal seal is inflated to make a firm seal, the probe device being then firmly mounted in and engaging the cone (Figs. 2 and 6). The fork-lift truck 23 is withdrawn, and the apparatus is rotated with the sub-frame 12 through 180° as shown by arrow 'X' so that the apparatus 1 is uppermost, the I.B.C. 2 now being upside down, Figs. 3 and 7. The I.B.C. 2 is then raised on the sub-frame by inflation of the bellows 17 so that the probe device 6'' enters into and engages the cone 22 of the silo (Figs. 4 and 8). This action causes the mouth to engage with the seal 18 of the outlet of the silo 3. The two probe devices 6', 6'' are then extended, in other words they are moved away from each other by actuation of suitable means such as bellows which cause the probe devices 6', 6'' to move apart over guide rods. As they are respectively in engagement with the cone of the I.B.C. and cone of the silo, the cone 21 is effectively lowered and the cone 22 raised. This action results in the opening of an annular section flow path through the apparatus, round the two probe devices. The particulate material 4 can then flow into the I.B.C. 2 from the silo 3. It will be understood that there could be a vibrator within the probe devices 6', 6''. When the required amount of material has been passed into the I.B.C. the respective bellows for the probe devices are actuated to lower the probe device 6'' and raise the probe device 6', so sealing the I.B.C. and hopper at the lip seals. The bellows 17 is deflated so that the clamp means 16 lowers the I.B.C. so that the probe device 6'' is lowered clear of the cone 22 of the silo 3 and the lip seal 7'' at the mouth of the chute 5 engages the probe device 6'', to seal the apparatus 1, which is then rotated by the frame (arrow 'Y') through 180° (Fig.8) so that it can be transported elsewhere by the fork-lift truck. During the whole filling process the surfaces 24 respectively the external surfaces the probe devices 6', 6'' and cones 22, 21 of the silo and I.B.C., as well as the external surfaces of the lip seals 7', 7'' are uncontaminated with material and remain dust free.

Using the invention it is then possible to pass material such as a powder into an I.B.C. which does not have a lid, by using the outlet opening as an inlet, the external surfaces remaining uncontaminated by material as it passes from the hopper to the I.B.C.. This is because as seating of the apparatus and I.B.C. takes place the flexible and resilient seal 6', engages and seals against the flexible and resilient seal 18 to form a cooperable or laminate or multi-leaf seal as shown in Fig. 14. At the same time, the probe 6' remains sealed within the lip seal 7', which butts firmly against its outer periphery over its whole circumference. A switch or suitable actuating mechanism (not shown) also inflates the pneumatic seal 23, so that it expands and seals against the interior of the wall of the cone 21. A similar action arises when the cone 22 is engaged by the probe device 7''. The seal means 7', 7'' 18 are initially in contact and flex upwardly as viewed under the inherent resilience whilst remaining in sealing engagement with the external peripheral surface of the respective probes 6', 6''.

As the apparatus is lowered, the seal 18 is separated from the seal 7', 7'', which latter seal is then horizontal as viewed and still in sealing engagement with the external surface of the respective probes 6', 6''. It will be understood that the underside (as viewed) of the seals 7', 7'' are 'clean' as it was protected against contact with the material 4 by the seal 18. There is thus no dust exposed to the environment using a system as hereinbefore described with reference to the drawings, the underside of the cones 21, 22 being completely clean and free of dust as the stations 2 and 3 are completely sealed at all times. Stated in another way, the surrounding atmosphere is protected against contamination and the material 4 is effectively contained at all times interiorly of the system, and exposure of the external surfaces of the system to the material 4 is obviated.

It will be understood that the apparatus described hereinbefore may be modified. For example the chute may be mountable on top (as viewed) of the I.B.C., that is it may be mountable at the lid thereof, and may then be operable to remove the lid and to replace it. In this embodiment, the I.B.C. does not have to be rotated and therefore the rotatable sub-frame 12 is not required. Further, the chute may comprise an upper part and a lower part which are sealingly connected to allow relative rotation about a central, longitudinal axis that is the axis which in use is aligned with the longitudinal axis of the hopper or silo and I.B.C.. The sealing connection of the two parts is to allow relative rotation whilst obviating leakage of material from the chute during transfer.

Each free end of the chute may have a part of a rotational or bayonet-kind of connection with a complementary part of a rotational or bayonet-kind of connection respectively at the outlet of the hopper or silo and at the lid of I.B.C.. In use, the chute, which is interposed between the outlet of the hopper or silo and the lid of the I.B.C. is offered up to say the hopper or silo so that the complementary connection parts are aligned and engaged.

The upper part of the chute is then rotated, and the complementary parts of the upper connection are thus securely locked together in sealing engagement. The I.B.C. (or other piece of apparatus such as a process vessel such as a dryer or blender, portable station, storage bin or the like), is then offered up to the bottom (in use) end of the chute so that the connection parts are aligned and engaged. The lower part of the chute is then rotated, and the complementary parts of the lower connection are thus securely locked together in sealing engagement. Probe devices as described in relation to the first embodiment then operate in a similar way to raise the cone valve of the hopper or silo and to raise the lid of the I.B.C., which lid is connection to the connection part of the I.B.C. and is thus now connected with the chute. The whole lower connection part of the chute and the lid is raised by the lower probe.

It will be understood that in the second embodiment, the chute includes two bellows, one aligned with the other and mounted on a respective support plate which are attached in such a way that they can rotate with respect to each other when the chute parts rotate relative to one another. The closing sequence is a reverse of the opening sequence described.

It will also be understood that in a further modification the chute may not be separate, it may be an integral part of, or a fixture with, the outlet of the hopper or silo, or an inlet of a receptacle such as a fixed station, where for example the I.B.C. stands in the stead of the hopper or silo, and discharges its contents to the fixed station where the system is such that the I.B.C. delivers to a reactor of which the fixed stations is a part.

In all embodiments, the systems hereinbefore described allow transfer of bulk materials such as powder or granules from vessel to vessel without the need to provide bulky, messy and labour intensive manual transfer valves using glove box enclosures, and moreover allow such transfer to be effected in vessels which are portable and/or required to rotate, and which do not have a lid, only a discharge opening.

## Claims

1. Apparatus for filling a container with flowable material from a store of that material, characterised by a chute (5), by a device (6) of the chute (5) operable to open and close both containers (2, 3) and by seal means (7) adapted to operate so that contamination of exterior surfaces of the apparatus (1) is substantially obviated during flow of material.

2. Apparatus according to Claim 1, characterised by the device (6) comprising two reciprocable probe devices (6) (6'').

3. Apparatus according to Claim 2, characterised by the two probe devices (6) (6'') being reciprocable along a common axis.

4. Apparatus according to any preceding claim, characterised by the chute (5) comprising a tube having one probe device (6') adjacent one end and the other probe device (6'') adjacent the other end, by the seal means (7) comprising a seal device (7'), at the one end and a seal device (7'') at the other end.

5. Apparatus according to Claim 4, characterised by each seal device (7'), (7'') being adapted to seal with a respective adjacent probe device.

6. Apparatus according to Claim 5, characterised by the respective seal devices (7') (7'') comprising resilient lip seals.

7. Apparatus according to Claim 5, characterised by the respective seal devices (7', 7'') comprising rotational seal devices.

8. Apparatus according to Claim 7, characterised by the chute comprising two relatively rotatable chute parts.

9. Apparatus according to any preceding claim, characterised by the chute (5) being a separate body interposable between the containers (2, 3).

10. Apparatus according to any of Claims 1 to 8, characterised by the chute (5) being integral with one of the containers (2, 3).

11. Apparatus according to any of Claims 1 to 9, characterised by a frame means (10) and by the frame means (10) mounting the chute (5) for rotation through substantially 180°.

12. Apparatus according to Claim 11, characterised by the frame means comprising a main frame (11) and a sub-frame (12), and by the sub-frame (12) being rotatable with respect to the main frame (11).

13. Apparatus according to Claim 12, characterised by means (14) of the frame means (10) to support the second container (3).

14. Apparatus according to Claim 12 or Claim 13, characterised by clamp means (16, 17) to claim a container (3) ion the frame means (10).

15. Apparatus according to Claim 14, characterised by the clamp means comprising bellows means (17).

16. A system for transferring flowable material, comprising a container of that material and a container for receiving that material, characterised by apparatus according to any preceding claim interposed therebetween.
